Europäisches Patentamt

European Patent Office

Office européen des brevets

(11) Veröffentlichungsnummer: **0 044 923**
**B1**

## EUROPÄISCHE PATENTSCHRIFT

(45) Veröffentlichungstag der Patentschrift:
06.02.85

(51) Int. Cl.⁴: **B 23 D 33/02** // B23D15/04

(21) Anmeldenummer: 81104360.3

(22) Anmeldetag: 05.06.81

(54) Scherenanlage zum Schopfen der Enden und/oder zum Abtrennen von Probenstücken an auf Bunde gewickeltem Walzband oder dergleichen.

(30) Priorität: 28.07.80 DE 3028538

(43) Veröffentlichungstag der Anmeldung:
03.02.82 Patentblatt 82/5

(45) Bekanntmachung des Hinweises auf die Patenterteilung:
06.02.85 Patentblatt 85/6

(84) Benannte Vertragsstaaten:
AT BE DE FR GB IT NL SE

(56) Entgegenhaltungen:
DE - A - 2 924 379
DE - B - 1 023 946
DE - B - 1 025 237
DE - C - 593 337

(73) Patentinhaber: SIEMAG transplan Gesellschaft mit beschränkter Haftung, Obere Industriestrasse 5, D-5902 Netphen 1 (DE)

(72) Erfinder: Ganseuer, Horst, Am alten Hahn 11, D-5910 Kreuztal Eichen (DE)
Erfinder: Remus, Dieter, Auf dem Garten 13a, D-5902 Nepthen 1 (DE)
Erfinder: Gail, Heinz, Am Witschenberg 6, D-5912 Hilchenbach 4 (DE)

(74) Vertreter: Hemmerich, Friedrich Werner et al, Patentanwälte F.W. Hemmerich Gerd Müller, Dipl.-Ing. D. Grosse Felix Pollmeier Hammerstrasse 2, D-5900 Siegen 1 (DE)

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft eine Scherenanlage gemäss Oberbegriff von Anspruch 1.

Bei einer solchen Scherenanlage nach einem älteren nicht vorveröffentlichten Vorschlag (DE-A 2 924 379) weist die Schere mit ihrer ortsfesten Schneidkante, bezogen auf die Achse eines auf den Stütz- oder Antriebsbock aufgesetzten Bandbundes, einen möglichst grossen Winkelabstand von der von ihr am weitesten entfernten Stütz- und Antriebsrolle des Stütz- oder Antriebsbockes auf und ist dabei mit ihrer Schnittebene im wesentlichen horizontal ausgerichtet.

Hierdurch soll die gattungsgemässe Scherenanlage nicht nur bei jedem vorkommenden Durchmesser der Bandbunde bzw. Coils, welcher bspw. zwischen 1000 mm und 2300 mm variieren kann, sicher arbeiten, sondern es soll auch gewährleistet werden, dass die für die Lagerung und den Transport um die Bandbunde bzw. Coils üblicherweise herumgelegten Spannbänder sich problemlos öffnen lassen und im Anschluss daran das Bandende ordnungsgemäss in den Schneidspalt der Schere zwecks Durchführung der Schopf- und Probenschnitte eingeführt wird.

Andererseits ist es mit der Scherenanlage nach dem älteren Vorschlag aber auch möglich, bspw. im Falle einer Unterbrechung des Weiterverarbeitungsvorgangs den vom Bandbund bzw. Coil abgewickelten Bandabschnitt wieder ordnungsgemäss auf den Bandbund bzw. das Coil zurückzuwickeln und anschliessend durch erneutes Herumlegen eines Spannbandes zu sichern.

Um zu erreichen, dass der vom Bandbund bzw. Coil jedes praktisch vorkommenden Durchmessers ablaufende Bandmaterialanfang allein aufgrund seiner Schwerkraftwirkung selbsttätig in den Schneidspalt der Schere einläuft und auch das Entfernen der Schopfstücke bzw. Probenstück aus dem Arbeitsbereich der Schere problemlos ist, wird nicht nur die Schnittebene der Schere unter die Achsebene des kleinsten vorkommenden Bandbundes und vorzugsweise auch unter die Stützebene des Stütz- oder Antriebsbockes gelegt, sondern es wird auch eine den Abstand zwischen der Schere und dem Stütz- und Antriebsbock überbrückende Bandleitvorrichtung vorgesehen, die auf unterschiedliche Bandbund-Durchmesser und/oder auf wechselnde Band-Biegeradien einstellbar ist. Die Bandleitvorrichtung besteht dabei aus einem mittels einer Schwinge um eine horizontale Achse relativ zum Rollenbock verlagerbaren, eine meissel- oder schneidenartige Anlagekante aufweisenden, Führungstisch, welchem zwei mit Abstand hintereinanderliegende, je um ortsfeste Achsen drehbare Rollen nachgeordnet sind. In den Spalt zwischen diesen Rollen kann eine dritte, quer zu ihrer Achse und relativ zur Schwinge verlagerbare Rolle angestellt werden, derart, dass die drei Rollen miteinander eine Bandrichtmaschine bilden. Der Spalt zwischen den beiden drehbaren Rollen des Führungstisches ist durch eine Zwischenplatte überbrückt und die verlagerbare Rolle ist über Lenker schwenkbeweglich in der Schwinge aufgehängt und kann über einen Stellantrieb relativ zu den beiden anderen Rollen bzw. gegen die Zwischenplatte angestellt werden. Zwischen Führungstisch und Schere befindet sich noch eine Leitrolle, die oberhalb der Schere in Schwenkarmen lagert, welche unabhängig von der Schwinge um eine unterhalb der Schnittebene der Schere liegende Achse verlagerbar sind. Diese Leitrolle hat sich insbesondere bei kleineren Durchmessern der Bandbunde bzw. Coils zum sicheren Einführen des Bandendes in die Schere bewährt. Die Leitrolle besteht dabei aus mehreren, auf einer gemeinsamen Achse sitzenden Rollenteilstücken, von denen wenigstens eines einen verminderten Durchmesser hat und aus Magnetmaterial besteht. Die dem einen Rollenteilstück innewohnende Magnetkraft wirkt auf das aufgetrennte Spannband ein, zieht dieses an und treibt es durch den Messerspalt der Schere in den unter der Schere befindlichen Schrottkübel.

Die Scherenanlage nach dem älteren Vorschlag hat zwar bei allen ihr zugedachten Funktionsabläufen eine sichere Arbeitsweise, bedingt jedoch noch einen verhältnismässig verwickelten Aufbau, welcher die Durchführung von Wartungs- bzw. Instandsetzungsarbeiten erschwert.

Zweck der Erfindung ist es nicht nur, diese Unzulänglichkeiten auszuräumen. Vielmehr liegt ihr auch die Aufgabe zugrunde, die gattungsgemässe Scherenanlage so weiterzubilden, dass sie trotz verminderten baulichen Aufwands mit erweitertem Funktionsbereich betrieben werden kann.

Zur Lösung dieser Aufgabe wird eine Scherenanlage der eingangs angegebenen Gattung mit den Kennzeichnungsmerkmalen des ersten Anspruchs ausgestattet.

Die optimale Wirkungsweise einer erfindungsgemässen Scherenanlage bei jeder Betriebsfunktion wird durch die im zweiten Anspruch aufgezeigten Merkmale gewährleistet.

Dabei ergibt sich eine besonders stabile bauliche Ausgestaltung durch Benutzung der im dritten Anspruch angegebenen Massnahmen.

Die im vierten und fünften Anspruch aufgezeigten Erfindungsmerkmale machen gegebenenfalls einen programmgesteuerten Betrieb der Scherenanlage möglich, wobei im einfachsten Falle der jeweils gewünschte Betriebszustand durch manuelle Betätigung eines Programmschalters vorwählbar ist.

In baulicher Hinsicht haben sich schliesslich auch die in den Ansprüchen 6 bis 8 vorgeschlagenen Massnahmen bewährt.

Die in den Ansprüchen 9 und 10 aufgezeigten Merkmale der Erfindung erweisen sich dann als wichtig und besonders vorteilhaft, wenn die Scherenanlage auch zum Schopfen der Enden und/oder zum Abtrennen von Probenstücken an besonders dicken Bändern in Benutzung genommen werden muss. Eine Überbeanspruchung der eigentlichen Schere wird hierdurch vermieden.

Anhand eines in der Zeichnung dargestellten Ausführungsbeispiels werden nachfolgend weitere Merkmale und Vorteile einer erfindungsgemässen Scherenanlage ausführlich erläutert.

Es zeigt

Figur 1 in Seitenansicht und im Vertikalschnitt die funktionswesentlichen Baugruppen der Scherenanlage,
Figur 2 eine Ansicht in Pfeilrichtung II-II auf die Scherenanlage nach Fig. 1,
Figur 3 eine der Fig. 1 entsprechende Schnittdarstellung durch die Scherenanlage in baulich und funktionell erweiterter Ausführung, und
Figur 4 eine weitere Bauart einer Anlage zum Schopfen und Probenschneiden von Walzband in einer der Fig. 1 entsprechenden Darstellung.

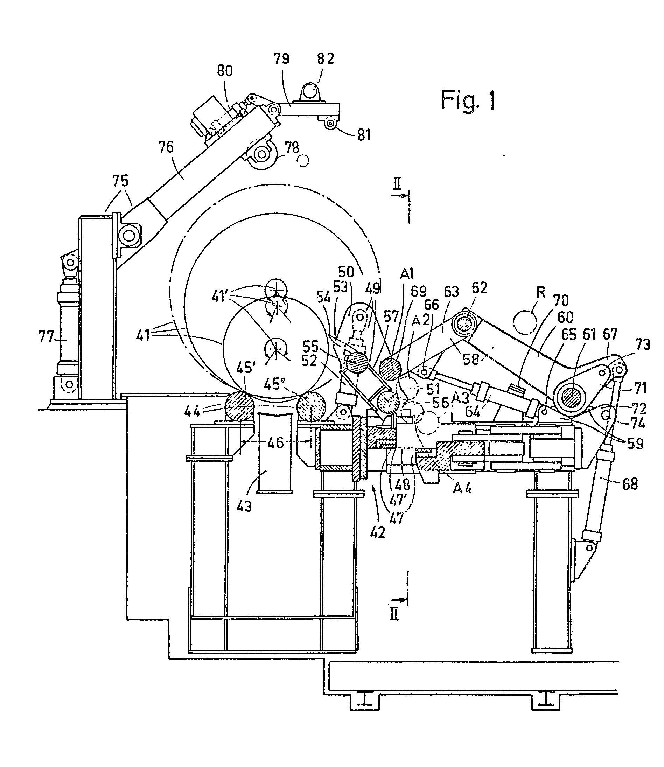

Die in Fig. 1 dargestellten Bandbunde 41 – die sogenannten Coils – werden der Scherenanlage 42 mit Hilfe eines Quertransportes, bspw. einer Hubbalken-Transportvorrichtung 43, schrittweise und richtungsparallel zu ihrer Wickelachse zugeführt und dabei einzeln in den Stütz- und Antriebsbock 44 der Scherenanlage 2 abgesetzt. Der Stütz- und Antriebsbock 44 ist dabei als Rollenbock mit zwei parallelachsigen Stütz- und Antriebsrollen 45′ und 45″ ausgeführt, indem die Stütz- und Antriebsrollen 45′ und 45″ einen Abstand 46 voneinander haben, welcher kleiner ist als der kleinste vorkommende Durchmesser der Bandbunde 41. Der Abstand 46 ist jedoch so bemessen, dass zwischen den beiden Stütz- und Antriebsrollen 45′ und 45″ des Stütz- und Antriebsbockes 44 die Hubbalken-Transportvorrichtung 43 vorgesehen werden kann. Die Stützebene der Stütz- und Antriebsrollen 45′ und 45″ ist innerhalb des Stütz- und Antriebsbockes 44 im wesentlichen horizontal ausgerichtet.

Hinter dem Stütz- und Antriebsbock 44 für die Bandbunde 41 ist die Schopf- und Probenschere 47 vorgesehen, und zwar so, dass deren Schnittebene 48 innerhalb der Stützebene des Stütz- und Antriebsbockes 44 liegt und eine im wesentlichen horizontale Ausrichtung hat.

Ein wichtiges Kriterium der Scherenanlage 42 liegt darin, dass die Schneidkante 47′ des ortsfesten Messers der Schopf- und Probenschere 47, relativ zur jeweiligen Wickelachse 41′ der auf dem Stütz- und Antriebsbock abgesetzten Bandbunde 41 einen möglichst grossen Winkelabstand von der von ihr am weitesten entfernten Stütz- und Antriebsrolle 45′ des Stütz- und/oder Antriebsbockes 44 aufweist. Es wird hierdurch nämlich sichergestellt, dass das von den einzelnen Bandbunden 41 durch Kraftantrieb der Stütz- und Antriebsrollen 45′, 45″ des Stütz- und Antriebsbockes 44 sowie bei entsprechenden Banddicken mit Unterstützung der Rolle 78 abgewickelte Bandende bei jedem vorkommenden Durchmesser des Bandbundes 1 unter der Wirkung seiner Schwerkraft selbsttätig in Richtung auf die Schnittebene 48 der Schopf- und Probenschere 47 läuft, ohne dass in bestimmten Einsatzfällen ein Aufstrecken des Bandes über die Streckgrenze erfolgt.

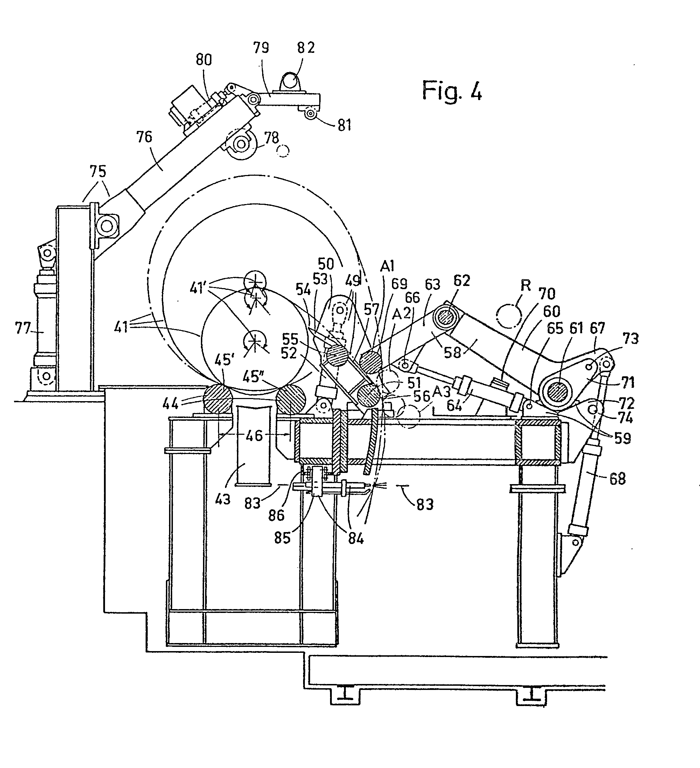

Damit aber in jedem Falle sichergestellt ist, dass das Bandende zur Durchführung des Schopf- und/oder Probenschnittes problemlos und sicher in den Schneidspalt der Schopf- und Probenschere 47 einläuft, ist noch eine besondere, den Abstand zwischen dem Stütz- und Antriebsbock 44 sowie der Schopf- und Probenschere 47 überbrückende Bandleitvorrichtung 49 vorgesehen. Diese lässt sich nicht nur auf die unterschiedlichen Durchmesser der Bandbunde 41 und/oder auf wechselnde Band-Biegeradien einstellen, Figur 4 eine weitere Bauart einer Anlage zum Schopfen und Probenschneiden von Walzband in einer der Fig. 1 entsprechenden Darstellung.

Die in Fig. 1 dargestellten Bandbunde 41 – die sogenannten Coils – werden der Scherenanlage 42 mit Hilfe eines Quertransportes, bspw. einer Hubbalken-Transportvorrichtung 43, schrittweise und richtungsparallel zu ihrer Wickelachse zugeführt und dabei einzeln in den Stütz- und Antriebsbock 44 der Scherenanlage 2 abgesetzt. Der Stütz- und Antriebsbock 44 ist dabei als Rollenbock mit zwei parallelachsigen Stütz- und Antriebsrollen 45′ und 45″ ausgeführt, indem die Stütz- und Antriebsrollen 45′ und 45″ einen Abstand 46 voneinander haben, welcher kleiner ist als der kleinste vorkommende Durchmesser der Bandbunde 41. Der Abstand 46 ist jedoch so bemessen, dass zwischen den beiden Stütz- und Antriebsrollen 45′ und 45″ des Stütz- und Antriebsbockes 44 die Hubbalken-Transportvorrichtung 43 vorgesehen werden kann. Die Stützebene der Stütz- und Antriebsrollen 45′ und 45″ ist innerhalb des Stütz- und Antriebsbockes 44 im wesentlichen horizontal ausgerichtet.

Hinter dem Stütz- und Antriebsbock 44 für die Bandbunde 41 ist die Schopf- und Probenschere 47 vorgesehen, und zwar so, dass deren Schnittebene 48 innerhalb der Stützebene des Stütz- und Antriebsbockes 44 liegt und eine im wesentlichen horizontale Ausrichtung hat.

Ein wichtiges Kriterium der Scherenanlage 42 liegt darin, dass die Schneidkante 47′ des ortsfesten Messers der Schopf- und Probenschere 47, relativ zur jeweiligen Wickelachse 41′ der auf dem Stütz- und Antriebsbock abgesetzten Bandbunde 41 einen möglichst grossen Winkelabstand von der von ihr am weitesten entfernten Stütz- und Antriebsrolle 45′ des Stütz- und/oder Antriebsbockes 44 aufweist. Es wird hierdurch nämlich sichergestellt, dass das von den einzelnen Bandbunden 41 durch Kraftantrieb der Stütz- und Antriebsrollen 45′, 45″ des Stütz- und Antriebsbockes 44 sowie bei entsprechenden Banddicken mit Unterstützung der Rolle 78 abgewickelte Bandende bei jedem vorkommenden Durchmesser des Bandbundes 1 unter der Wirkung seiner Schwerkraft selbsttätig in Richtung auf die Schnittebene 48 der Schopf- und Probenschere 47 läuft, ohne dass in bestimmten Einsatzfällen ein Aufstrecken des Bandes über die Streckgrenze erfolgt.

Damit aber in jedem Falle sichergestellt ist, dass das Bandende zur Durchführung des Schopf- und/oder Probenschnittes problemlos und sicher in dem Schneidspalt der Schopf- und Probenschere 47 einläuft, ist noch eine besondere, den Abstand zwischen dem Stütz- und Antriebsbock 44 sowie der Schopf- und Probenschere 47 überbrückende Bandleitvorrichtung 49 vorgesehen. Diese lässt sich nicht nur auf die unterschiedlichen Durchmesser der Bandbunde 41 und/oder auf wechselnde Band-Biegeradien einstellen, sondern kann auch bei jedem vorkommenden Bandbund-Durchmesser relativ zum Bundumfang in eine sekantiale Lage gebracht werden.

Die Bandleitvorrichtung 49 wird von einem mittels einer Schwinge 50 um eine ortsfeste Lagerachse 51 durch einen Stellantrieb 52, nämlich einen Druckmittelzylinder, verlagerbaren Führungstisch 53 gebildet. Dabei lässt sich die Neigungslage des Führungstisches 53 zwischen der Horizontalen und der Vertikalen um die Achse 51 derart variieren, dass dabei eine Abstandsänderung der meissel- bzw. schneidenartigen Anlagekante 54 des Führungstisches 53 von der vertikalen Achsebene der Bandbunde 41 eintritt. Die Schwenkachse der Schwinge 51 ist dabei so gelegt, dass der Führungstisch 53 mit seiner meissel- bzw. schneidenartigen Anlagekante 54 immer sekantial gegen den jeweiligen Umfang des Bandbundes 41 angestellt und gedrückt werden kann.

Der Führungstisch 53 weist zwei im Abstand hintereinanderliegende und jeweils um ortsfeste Achsen drehbare Rollen 55 und 56 auf, wobei der Spalt zwischen diesen beiden Rollen 55 und 56 durch eine Zwischenplatte 57 überbrückt wird, die gegenüber einer die beiden Rollen 55 und 56 tangierenden Ebene zurückversetzt liegt.

Aus Fig. 1 ist ferner ersichtlich, dass die Lagerachse 51 für die Schwinge 50 mit der Drehachse für die Role 56 zusammenfällt.

Während bei grossem Durchmesser der Bandbunde 41 und damit auch grossem Krümmungsradius des Bandendes vielfach der Führungstisch 53 mit seinen Rollen 55 und 56 allein ausreicht, um das Bandende in die Schopf- und Probenschere 47 einlaufen zu lassen, erweist es sich als notwendig, bei kleineren Bandbunden 41 und damit auch kleinerem Biegeradius des Bandendes zusätzliche Vorkehrungen zu treffen, damit dieses sicher in die Schopf- und Probenschere 47 geführt wird. Zu diesem Zweck ist der Bandleitvorrichtung 49 ein Gelenkviereck 58 zugeordnet. Dieses Gelenkviereck 58 wird von dem ortsfesten Gestell 59, einem auf diesem um die ortsfeste Achse 61 bewegbaren Schwenkarm 60, einem wiederum an diesem um die Achse 62 verschwenkbar aufgehängten Lenker 63 und einem längenverstellbaren Stützorgan 64 gebildet, welches einerseits um die ortsfeste Achse 65 am Gestell 59 beweglich ist und andererseits über die Achse 66 am Lenker 63 gelenkig angreift. Der Schwenkarm 60 ist als Winkelhebel ausgeführt, wobei an seinem über die Achse 61 hinausragenden Hebelarm 67 der am Gestell 59 verankerte Stellantrieb 68 angreift, welcher durch Druckmittelzylinder gebildet wird. Auch das längenverstellbare Stützorgan 64 des Gelenkvierecks 58 wird von Stellantrieben in Form von Druckmittelzylindern gebildet.

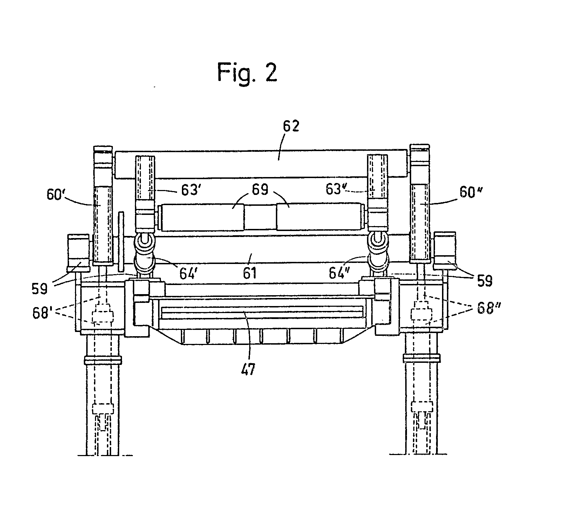

Aus Fig. 2 geht hervor, dass das Gelenkviereck 58 zwei mit seitlichem Abstand nebeneinander angeordnete Schwenkarme 60', 60'' aufweist, welche durch die beiden Achsen 61 und 62 rahmenartig starr miteinander verbunden sind. Dabei ist die Achse 62 relativ zu den Schwenkarmen 60' und 60'' drehbar gehalten und trägt wiederum zwei mit seitlichem Abstand nebeneinander angeordnete Lenker 63' und 63''. An diesen Lenkern 63' und 63'' greifen dann wiederum die ebenfalls paarweise angeordneten und von Druckmittelzylindern gebildeten, längenverstellbaren Stützorgane 64' und 64'' an. Schliesslich sind auch zwei Stellantriebe 68' und 68'' in Form von Druckmittelzylindern zum Bewegen der Schwenkarme 60' und 60'' vorgesehen.

Durch die paarweise Anordnung und die gegenseitige Querverbindung der Glieder des Gelenkvierecks erhält dieses eine sehr steife und damit dauerhaft funktionssichere Ausgestaltung.

Am freien Ende des im Gelenkviereck 58 als Koppel wirkenden Lenkers 63, und zwar zwischen den beiden paarweise zusammengehörenden Lenkern 63' und 63'' ist eine Rolle 69 frei drehbar gelagert, die sich mittels des Gelenkvierecks 58 nicht nur in vier verschiedene Arbeitspositionen, sondern ausserdem noch in eine Ruheposition bewegen lässt. In der Ruheposition wird die Rolle 69 durch Betätigung des Gelenkvierecks 58 in die Stellung R nach Fig. 1 gebracht. Die erste Arbeitsposition der Rolle 69 ist in Fig. 1 durch voll ausgezogene Linien dargestellt und mit A1 bezeichnet. In dieser Arbeitsposition A1 wirkt dabei die Rolle 69 mit den beiden Rollen 55 und 56 des Führungstisches 53 zusammen und bildet zusammen mit diesen eine Richtmaschine für das Bandende. Die Ausübung eines Richteffektes auf das der Schopf- und Probenschere 47 zuzuführende Bandende ist nämlich immer dann sinnvoll, wenn für die an den Schopf- und Probenschnitt anschliessende Weiterbehandlung bzw. Weiterverarbeitung des Bandmaterials ein gerades Einführende gefordert wird. Die Arbeitsposition A1 der Rolle 69 relativ zu den beiden Rollen 55 und 56 des Führungstisches 53 ist immer die gleiche. Da jedoch der Führungstisch 63 in Abhängigkeit von den unterschiedlichen Durchmessern der Bandbunde 41 auch unterschiedliche Raumlagen einnimmt, ergeben sich infolgedessen bei unterschiedlichen Durchmessern der Bandbunde 41 auch für die Arbeitsposition A1 der Rolle 69 entsprechend unterschiedliche Raumlagen. Diese unterschiedlichen Raumlagen lassen sich dabei durch entsprechende Betätigung der Stellantriebe 68 bzw. 68', 68'' für den Schwenkarm 60 bzw. 60', 60'' und der die Stützorgane 64 bzw. 64', 64'' bildenden Stellantriebe des Gelenkvierecks 58 ohne weiteres einstellen. In der zweiten Arbeitsposition A2 kann diese zusammen mit der Rolle

4

56 im Führungstisch 53 einen Treibapparat für das Bandmaterial bilden, wenn eine der beiden Rollen, vorzugsweise die Rolle 56, durch einen Kraftantrieb drehangetrieben wird.

In der dritten Arbeitsposition A3 wirkt die Rolle 69 mit der Bandleitvorrichtung 49 als Leitrolle zusammen, welche sich oberhalb der Schopf- und Probenschere 47 befindet. Durch das Zusammenwirken der Rolle 69 in der Arbeitsposition A3 mit dem Führungstisch 53 sowie den darin lagernden Rollen 55 und 56 wird dann das Bandende auch bei kleinem Durchmesser der Bandbunde 41 sicher in den Schneidspalt der Schopf- und Probenschere 47 abgelenkt. In der Arbeitsposition A3 wirkt also die Rolle 69 gewissermassen als Niederhalter und Einführrolle für das der Schopf- und Probenschere 47 zugeführte Bandende.

Schliesslich lässt die Rolle 69 sich mit Hilfe des Gelenkvierecks 58 auch noch in die vierte Arbeitsposition A4 stellen, in welcher sie wiederum mit der Rolle 56 des Führungstisches 53 in Wirkverbindung tritt, und zwar dergestalt, dass sie nach Durchführung des Schopf- bzw. Probenschnittes am Bandende beim Zurückziehen desselben ein Gegenbiegen des Bandendes bewirkt und damit ein dichtes Anlegen desselben beim Zurücklaufen auf den Bandumfang sicherstellt.

Damit die Rolle 69 mit Hilfe des Gelenkvierecks 58 über ihre Arbeitsposition A3 hinaus nicht weiter nach abwärts bewegt, also nicht in den Arbeitsbereich der Schopf- und Probenschere 47 gelangen kann, ist der Schwenkweg der Schwenkarme 60 bzw. 60', 60'' nach abwärts durch einen gestellfesten Anschlag 70 begrenzt.

In der Ruheposition R der Rolle 69 nimmt das Gelenkviereck 58 eine solche Stellung ein, dass nicht nur die Schopf- und Probenschere 47 von oben her, sondern vielmehr auch die Schwinge 49 mit dem Führungstisch 53 von der Seite her frei zugänglich ist.

Damit das Gelenkviereck 58 in der Ruheposition R der Rolle 69 während der Durchführung von Wartungs- und Instandsetzungsarbeiten nicht unbeabsichtigt in irgendeine der Arbeitspositionen A1 bis A4 zurückgestellt werden kann, ist mit den Schwenkarmen 60 bzw. 60', 60'' des Gelenkvierecks 58 bzw. auf der diese drehfest tragenden Achse 61 ein Sicherungsarm 71 drehfest verbunden, der in den Bereich eines gestellfesten Sicherungsarmes 72 gelangt und an diesem durch Einsetzen von Steckbolzen in die in Deckungslage befindlichen Löcher 73 und 74 blockiert werden kann.

Aus Fig. 1 geht noch hervor, dass der Scherenanlage 42 eine Andruckvorrichtung 75 zugeordnet ist. Diese hat einen Schwenkarm 76, welcher durch einen Stellantrieb 77, z.B. einen Druckmittelzylinder, bewegt werden kann und eine Andruckrolle 78 trägt. Durch entsprechende Betätigung des Stellantriebes 77 kann die Andruckrolle 78 gegen den Umfang des Bandbundes 41 angelegt werden, wodurch zusammen mit den Stütz- und Antriebsrollen 45' und 45'' ein sicherer Transport der Bänder in die Schere gewährleistet wird. Am freien Ende des Schwenkarmes 76 ist ein weiterer, kurzer Schwenkarm 79 angelenkt, der sich durch einen Stellantrieb 80 bewegen lässt und an seinem freien Ende eine Magnetrolle 81 trägt, die durch einen Motor 82 drehangetrieben werden kann. Durch Anlegen der Magnetrolle 81 gegen den Umfang der Bandbunde 41 zieht diese durch ihr Magnetfeld das den Bandbund 41 umgebende durchtrennte Spannband an und treibt es durch den Messerspalt der Schere in den unter der Schere befindlichen Schrottkübel.

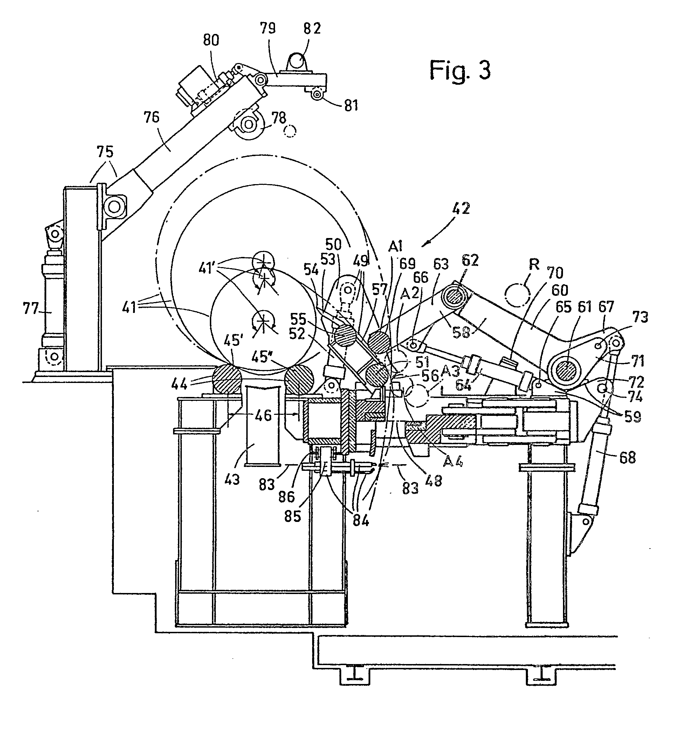

In Fig. 3 ist eine Scherenanlage 42 dargestellt, die in Bauart und Wirkungsweise vollkommen mit der Scherenanlage nach Fig. 1 übereinstimmt.

Im Unterschied zur Scherenanlage 42 nach Fig. 1 ist sie jedoch noch mit einer Brennschneidmaschine 84 als Zusatzaggregat ausgestattet. Diese Brennschneidmaschine 84 ist dabei in einer unterhalb der Lagerachse 51 für die Schwinge 50 und auch der Lagerachse 61 für die Schwenkarme 60, 60', 60'' liegenden Ebene 83 angeordnet.

Damit die Schere 47 und die Brennschneidmaschine 84 jeweils unabhängig voneinander in Benutzung genommen werden können, ohne dass sie sich gegenseitig behindern, erweist es sich als sinnvoll, die Arbeitsebene 83 der Brennschneidmaschine 84 mit Abstand unterhalb der Schnittebene 48 der Schere 47 vorzusehen. Auf diese Art und Weise wird zugleich auch verhindert, dass durch den beim Brennschneiden unvermeidlichen Funkenflug andere funktionswichtige Teile der Scherenanlage beeinträchtigt werden.

Die Brennschneidmaschine 84 ist mittels eines antreibbaren Transportwagens 85 in Führungen 86 unterhalb des Stütz- und/oder Rollenbockes 44 aufgehängt, die sich in einer Horizontalebene erstrecken und parallel zur Wickelachse 41' der Bandbunde 41 bzw. quer zur Längsrichtung des von den Bandbunden 41 abgewickelten Walzbandes verlaufen.

Die Brennschneidmaschine 84 lässt sich besonders dann in Betrieb nehmen, wenn auf der Scherenanlage 42 Walzband grosser Dicke bearbeitet werden muss, an dem sich Schopf- und Probenschnitte mit Hilfe der Schere 47 nicht mehr oder aber nur noch unter beträchtlichen Schwierigkeiten durchführen lassen.

Wie sich aus Fig. 4 ergibt, ist es in manchen Fällen auch möglich, in der Anlage zum Schopfen der Enden und/oder zum Abtrennen von Probenstücken an Walzband zur Durchführung der Trennschnitte ausschliesslich die Brennschneidmaschine 84 in der Horizontalebene 83 beweglich anzuordnen und die Schere 47 wegzulassen.

**Patentansprüche**

1. Scherenanlage zum Schopfen der Enden und/oder zum Abtrennen von Probenstücken an auf Bunde (41) gewickeltem Walzband oder dergleichen mit einem im Abstand von der Schere (47) angeordneten Stütz- und Antriebsbock (44) für einzelne Bandbunde (41), dessen Stützebene im wesentlichen horizontal ausgerichtet ist und welcher bspw. aus einem Rollenbock mit zwei parallelachsigen Stütz- und Antriebsrollen (44) besteht, die einen Abstand (46) voneinander haben, der kleiner als der kleinste vorkommende Bandbunddurchmesser ist und auf die die Bandbunde (41) mit ihrem Umfang aufsetzbar sind, wobei die Schere (47) mit ihrer ortsfesten Schneidkante, bezogen auf die Achse eines auf den Stütz- oder Antriebsbock aufgesetzten Bandbundes (41), einen möglichst grossen Winkelabstand von der von ihr am weitesten entfernten Stütz-. und Antriebsstelle des Stütz- oder Antriebsbockes (44) aufweist und dabei mit ihrer Schnittebene (48) im wesentlichen horizontal ausgerichtet ist, und mit einer durch ein verstellbares Stützorgan (64) mit Hilfe von Lenkern (63, 63', 63") verlagerbaren Rolle (69), die mit einem an einer Schwinge (50) gelagerten Führungstisch (53) zusammenwirkt, dadurch gekennzeichnet, dass die anderen Enden der Lenker (63, 63', 63") in Schwenkarmen (60, 60', 60") gelagert sind (62), die unabhängig von der Schwinge (50) um eine oberhalb der Schnittebene (48) der Schere (47) liegende, ortsfeste Achse (61) verlagerbar und durch einen weiteren Stellantrieb (68, 68, 68"), z.B. Druckmittelzylinder, bewegbar sind.

2. Scherenanlage nach Anspruch 1, dadurch gekennzeichnet, dass die Lenker (63, 63', 63") mit den Schwenkarmen (60, 60', 60"), dem Stützorgan (64, 64', 64") und dem Gestell (59) ein Gelenkviereck (58) bilden, innerhalb dessen die Lenker (63, 63', 63") als Kuppel wirksam sind, während seine Schwinghebel aus den Schwenkarmen (60, 60', 60") und dem längenverstellbaren Stützorgan (64, 64', 64") gebildet sind (Fig. 1).

3. Scherenanlage nach einem der Ansprüche 1 und 2, dadurch gekennzeichnet, dass Schwenkarme (60), Lenker (63), Stützorgane (64) und Stellantriebe (68) jeweils paarweise und im Abstand nebeneinander vorgesehen sind (60', 60"; 63', 63"; 64', 64" und 69', 68"; Fig. 2).

4. Scherenanlage nach einem der Ansprüche 1 bis 3, dadurch gekennzeichnet, dass die Rolle (69) mittels des Gelenkvierecks (58) in mindestens drei verschiedene Arbeitspositionen (A1, A2 und A3) und eine Ruheposition (R) bewegbar sowie in diesen fixierbar ist, wobei sie in der einen Arbeitsposition (A1) mit den beiden Rollen (55 und 56) des Führungstisches (53) eine Bandrichtmaschine bildet, in der zweiten Arbeitsposition (A2) mit der Rolle (56) als Treibapparat zusammenwirkt, in der dritten Arbeitsposition (A3) als Bandleitrolle oberhalb der Schere (47) liegt und schliesslich in der vierten Position (R) mit grossem Abstand von der Schere (47) und dem Führungstisch (53) bzw. der Schwinge (50) die Ruhestellung einnimmt.

5. Scherenanlage nach einem der Ansprüche 1 bis 4, dadurch gekennzeichnet, dass die Rolle (69) in einer vierten Arbeitsposition (A4) mit der Rolle (56) eine Band-Gegenbiegevorrichtung bildet.

6. Scherenanlage nach einem der Ansprüche 1 bis 5, dadurch gekennzeichnet, dass der Schwenkweg der Schwenkarme (60; 60', 60") nach abwärts durch einen gestellfesten Anschlag (70) begrenzt ist.

7. Scherenanlage nach einem der Ansprüche 1 bis 6, dadurch gekennzeichnet, dass die Schwenkarme (60, 60', 60") als Winkelhebel ausgebildet sind, an dessen freiem Arm (67), der seitlich am Gestell (59) gelagerte und im wesentlichen aufwärts gerichtete Stellantrieb (68, 68', 68") angreift.

8. Scherenanlage nach einem der Ansprüche 1 bis 7, dadurch gekennzeichnet, dass eine Andruckvorrichtung (75) vorgesehen ist, die mittels eines durch einen Stellantrieb (77) bewegbaren Schwenkarms (76) eine Andruckrolle (78) gegen den Umfang des Bandbundes (1) anlegt und dass am freien Ende des Schwenkarms (76) ein weiterer Schwenkarm (79) durch einen Stellantrieb (80) bewegbar angeordnet ist, der wiederum an seinem freien Ende eine drehangetriebene (82) Magnetrolle (81) trägt, die als Spannband-Abtransportvorrichtung wirksam ist.

9. Scherenanlage nach einem der Ansprüche 1 bis 7, dadurch gekennzeichnet, dass in einer unterhalb der Lagerachsen (51 und 61) von Schwinge (50) und Schwenkarmen (60, 60', 60") insbesondere auch unterhalb der Schnittebene (48) der Schere (47) liegenden Ebene (83) eine Brennschneidmaschine (84) angeordnet ist.

10. Scherenanlage nach Anspruch 9, dadurch gekennzeichnet, dass die Brennschneidmaschine (84) mittels eines antreibbaren Transportwagens (85) in einer Horizontalebene (83) parallel zur Wickelachse (41') der Bandbunde (41) verfahrbar in Führungen (86) unterhalb des Stütz- und/oder Rollenbockes (44) läuft.

**Claims**

1. Shears unit for cropping the ends and/or for cutting off sample pieces from rolled strip reeled into a coil (41) or the like with a support and drive stand (44) for individual strip coils (41), which is arranged at a spacing from the shears (47) and the support plane of which is oriented substantially horizontally and which for example consists of a roller stand with two axially parallel support and drive rollers (44), which have a spacing (46) each from the other smaller than the smallest occurring strip coil diameter and onto which the strip coils (41) are placeable by their circumference, wherein the shears (47) by its fixedly located cutting edge and with respect to the axis of a strip coil (41) placed on the support or drive stand displays a greatest possible angular spacing from the support and drive point, most remote from it, of the support or drive stand (44) and is in that case oriented substantially horizontally by its cutting plane (48), and with a roller (69), which is shiftable with the aid of guide rods (63, 63', 63") by a displaceable support organ (64) and co-operates with a support table (53) borne at a rocker (50), characterised thereby, that the other ends of the guide rods (63, 63', 63") are borne (62) in pivot arms (60, 60', 60"), which independently of the rocker (50) are shiftable around a fixedly located axle (61) lying above the cutting plane (48) of the shears (47) and movable by a further setting drive (68, 68', 68''), for example pressure medium cylinders.

2. Shears unit according to claim 1, characterised thereby, that the guide rods (63, 63', 63'') with the pivot arms (60, 60', 60''), the support organ (64, 64', 64'') and the frame (59) form a link quadrilateral, within which the guide rods (63, 63', 63'') are effective as couplers, whilst its pivot levers are formed of the pivot arms (60, 60', 60'') and the support organ (64, 64', 64'') of resettable length (Fig. 1).

3. Shears unit according to one of the claims 1 and 2, characterised thereby, that pivot arms (60), guide rods (63), support organs (64) and setting drives (68) are provided in respective pairs and at a spacing one beside the other (60', 60''; 63', 63''; 64', 64'' and 68', 68''; Fig. 2).

4. Shears unit according to one of the claims 1 to 3, characterised thereby, that the roller (69) is movable by means of the link quadrilateral (58) into at least three different operative positions (A1, A2 and A3) and one rest position (R) as well as fixable in these, wherein it forms a strip-aligning machine by both the rollers (55 and 56) of the guide table (53) in the one operative position (A1), co-operates with the roller (56) as drive apparatus in the second operative position, lies above the shears (47) as strip guide roller in the third operative position (A3) and finally in the fourth position (R) assumes the rest setting at great spacing from the shears (47) and the guide table (53) or the rocker (50).

5. Shears unit according to one of the claims 1 to 4, characterised thereby, that the roller (69) in a fourth operative position (A4) forms a strip counterbending device with the roller (56).

6. Shears unit according to one of the claims 1 to 5, characterised thereby, that the pivotal travel of the pivot arms (60; 60', 60'') is limited downwardly by an abutment (70) fast with the frame.

7. Shears unit according to one of the claims 1 to 6, characterised thereby, that the pivot arms (60, 60', 60'') are constructed as bell crank leavers, at the free arm (67) of which engages the setting drive (68, 68', 68'') borne laterally at the frame (59) and directed substantially upwards.

8. Shears unit according to one of the claims 1 to 7, characterised thereby, that a contact pressure device (75) is provided, which by means of a pivot arm (76) movable by a setting drive (77) lays a contact pressure roller (78) against the circumference of the strip coil (1) and that a further pivot arm (79) is arranged at the free end of the pivot arm (76) to be movable by a setting drive (80) and in turn at its free and carries a rotationally driven (82) magnetic roller (81), which is effective as tension band removal transport device.

9. Shears unit according to one of the claims 1 to 7, characterised thereby, that a flame cutting machine (84) is arranged in a plane (83) lying below the bearing axles (51 and 61) of rocker (50) and pivot arms (60, 60', 60''), particularly also below the cutting plane (48) of the shears (47).

10. Shears unit according to claim 9, characterised thereby, that the flame cutting machine (84) runs in guides (86) underneath the support and/or roller stand (44) to be drivable in a horizontal plane (83) parallel to the reeling axis (41') of the strip coils (41) by means of a drivable transport carriage (85).

**Revendications**

1. Installation de cisaillage pour ébouter les extrémités et/ou pour prélever des échantillons sur un feuillard ou produit analogue enroulé en couronnes (41), avec, disposé à distance de la cisaille (47), un chevalet de soutien et d'entraînement (44) pour différentes couronnes de feuillard (41), dont le plan de soutien est orienté sensiblement horizontalement et qui se compose par exemple d'un support à rouleaux comportant deux rouleaux (44) de soutien et d'entraînement à axes parallèles qui ont entre eux un intervalle (46) plus petit que le plus petit diamètre de couronne qui se présente et sur lesquels les couronnes de feuillard (41) peuvent être déposées par leur pourtour, la cisaille (47) présentant, par son arête de coupe fixe, rapporté à l'axe d'une couronne de feuillard (41) déposée sur le chevalet de soutien et d'entraînement, une distance angulaire aussi grande que possible de l'endroit du chevalet de soutien et d'entraînement qui assure le soutien et l'entraînement et est le plus éloigné de cette arête, le plan de coupe (48) de cette cisaille étant orienté sensiblement horizontalement, et avec un rouleau (69) déplaçable par un organe de soutien mobile (64) à l'aide de biellettes (63, 63', 63''), ce rouleau (69) coopérant avec une table de guidage (53) montée sur un bras oscillant (50), caractérisée en ce que les autres extrémités des biellettes (63, 63', 63'') sont montées (62) dans des bras pivotants (60, 60', 60'') qui, indépendamment du bras oscillant (50), peuvent être déplacés autour d'un axe fixe (61) situé au-dessus du plan de coupe (48) de la cisaille (47) et mus par un autre mécanisme positionneur (68, 68', 68''), par exemple des vérins.

2. Installation de cisaillage selon la revendication 1, caractérisée en ce que les biellettes (63, 63', 63'') forment avec les bras pivotants (60, 60', 60''), l'organe de soutien (64, 64', 64'') et le bâti (59) un parallélogramme articulé (58) à l'intérieur duquel les biellettes (63, 63', 63'') opèrent en tant qu'accouplements, tandis que ses leviers oscillants sont formés par les bras pivotants (60, 60', 60'') et par l'organe de soutien de longueur variable (64, 64', 64'') (Fig. 1).

3. Installation de cisaillage selon une des revendications 1 et 2, caractérisée en ce que bras pivotants (60), biellettes (63), organes de soutien (64) et mécanismes positionneurs (68) sont prévus en double et à côté l'un(e) de l'autre avec un intervalle entre eux (elles) (60', 60''; 63', 63''; 64', 64'' et 68', 68''; fig. 2).

4. Installation de cisaillage selon une des revendications 1 à 3, caractérisée en ce que le rouleau (69) peut, au moyen du parallélogramme articulé (58), être amené et immobilisé dans au moins trois positions de travail différentes (A1, A2 et A3) et dans une position de repos (R), en formant dans une position de travail (A1), avec les deux rouleaux (55 et 56) de la table de guidage (53), une machine à dresser le feuillard, tandis que dans la deuxième position de travail (A2) il coopère avec le rouleau (56) en tant qu'appareil d'entraînement, que dans la troisième position de travail (A3) il est situé, en tant que rouleau de guidage du feuillard, au-dessus de la cisaille (47), et qu'enfin dans la quatrième position (R) il occupe la position de repos à grande distance de la cisaille (47) et de la table de guidage (53) ou du bras oscillant (50).

5. Installation de cisaillage selon une des revendications 1 à 4, caractérisée en ce que le rouleau (69) dans une quatrième position de travail (A4) forme avec le rouleau (56) un dispositif de contre-flexion du feuillard.

6. Installation de cisaillage selon une des revendications 1 à 5, caractérisée en ce que la course de de pivotement des bras pivotants (60, 60', 60") est limitée vers le bas par une butée (70) fixée au bâti.

7. Installation de cisaillage selon une des revendications 1 à 6, caractérisée en ce que les bras pivotants (60, 60', 60") sont conçus sous forme de leviers coudés dont le bras libre (67) est attaqué par le mécanisme positionneur (68, 68', 68") monté latéralement sur le bâti (59) et dirigé sensiblement vers le haut.

8. Installation de cisaillage selon une des revendications 1 à 7, caractérisée en ce qu'elle comporte un dispositif presseur (75) qui, au moyen d'un bras pivotant (76) déplaçable par un mécanisme positionneur (77), applique un rouleau presseur (78) contre le pourtour de la couronne de feuillard, et en ce qu'à l'extrémité libre du bras pivotant (76) est disposé un autre bras pivotant (79) déplaçable par un mécanisme positionneur (80) et portant à son extrémité libre un rouleau magnétique (81) entraîné en rotation (82) qui agit comme dispositif d'enlèvement de la bande de serrage.

9. Installation de cisaillage selon une des revendications 1 à 7, caractérisée en ce qu'une machine de coupe au chalumeau (84) est disposée dans un plan (83) situé au-dessous des axes de palier (51 et 61) du bras oscillant (50) et des bras pivotants (60, 60', 60"), notamment aussi au-dessous du plan de coupe de la cisaille (47).

10. Installation de cisaillage selon la revendication 9, caractérisée en ce que la machine de coupe au chalumeau (84) peut être déplacée dans des guidages (86) au-dessous du chevalet de soutien et/ou à rouleaux (44), dans un plan horizontal (83) parallèle à l'axe d'enroulement (41') des couronnes de feuillard (41).

0 044 923

Fig. 1

# Fig. 2

# Fig. 3

Fig. 4